# EUROPÄISCHE PATENTSCHRIFT

(11) **EP 1 997 621 B1**
(45) Veröffentlichungstag und Bekanntmachung des Hinweises auf die Patenterteilung: **26.06.2013**
(21) Anmeldenummer: 08006942.0
(22) Anmeldetag: 08.04.2008
(51) Int. Cl.: B32B 15/20, A47B 77/02, A47B 96/18, E04F 13/14

(54) **Verbundplatte**
Composite plate
Plaque composite

(30) Priorität: 31.05.2007 DE 102007025544
(43) Veröffentlichungstag der Anmeldung: 03.12.2008
(73) Patentinhaber: SieMatic Möbelwerke GmbH & Co. KG, 32584 Löhne (DE)
(72) Erfinder: Siekmann, Ulrich Wilhelm, 32584 Löhne (DE)
(74) Vertreter: Schober, Mirko

(56) Entgegenhaltungen:
- DE-U1- 20 311 966
- DE-U1-202004 004 185
- DE-U1-202005 008 536

## Beschreibung

Die vorliegende Erfindung betrifft Verbundplatten nach dem Oberbegriff von Anspruch 1, wie sie vor allem bei Arbeitsplatten für Küchen eingesetzt werden.

Eine entsprechende Platte ist z.B. aus DE 20 2004 004 185 U1 bekannt. Es handelt sich um eine sogenannte Sandwichplatte mit einer Steindekorschicht und einem Kern aus mehreren Schichten, einer leichteren Schicht aus Schaummaterial und einer unteren Schicht aus einem Material, welches mit Schrauben zu befestigen ist. Am Rand der Platte sind Metallhohlprofile eingeschäumt.

Aus DE 16 59 179 C3 ist eine Sandwichplatte bekannt, welche aus einer Schichtabfolge aus Naturstein (Marmor), einem Füllkörper aus Kunststoffschaum und zu unterst einer Metallschicht besteht. Diese Konstruktion soll eine an und für sich massive und damit schwere Steinplatte durch eine leichtere Variante ersetzen, ohne daß dabei auf die Natursteinoberfläche verzichtet werden braucht.

Eine weitere entsprechende Platte ist zum Beispiel aus DE 199 07 309 B4 bekannt. Diese weist eine Deckschicht aus Naturstein auf, an deren Unterseite ein Polyurethanformkörper ausgebildet ist. Dieser wiederum beinhaltet, der Deckschicht zugewandt, eine weichere Schicht und eine von der Deckschicht abgewandte härtere Schicht auf. Die Platte soll zum einen eine möglichst leichte Unterkonstruktion durch einen leichten Füllkörper aufweisen, zum anderen jedoch ausreichende Stabilität bieten. Diese Forderung ergibt sich einerseits daraus, daß die Natursteindeckschicht spröde ist und daher zum Brechen neigt. Andererseits soll die Platte an ihrer Unterseite mit einem Unterbau fest verbunden werden. Dies wird im genannten Stand der Technik durch eine schraubfeste untere Schicht erreicht, die Teil des Polyurethanformkörpers ist.

Die DE 203 11 966 U1 zeigt eine Arbeitsplatte mit einer oberen Decklage aus Naturstein und wenigstens einer zusätzlichen Schicht zur Verstärkung aus Kohlefaser und/oder Aramid.

DE 20 2005 008 536 U1 beschreibt ein Bauelement mit einer Deckschicht aus Stein oder Glas, welches mit einem streifenförmigen Bewehrungskörper aus Glasfasermaterial an einer Längsfläche des Bauelements mittels Epoxydharzkleber verbunden ist.

Die bekannten Lösungen für Unterkonstruktionen für Steinplatten weisen dahingehend Nachteile auf, daß sie an Stellen, an denen das Plattenmaterial aufgrund von Ausnehmungen in der Oberfläche dünner ist, nicht die erforderliche Bruchfestigkeit gewährleisten können. Hierzu ist es in der Regel erforderlich, die Steinplatten an der Unterseite durch ein aus miteinander verschweißten Rechteckrohren bestehendes Gerüst zu verstärken. Dies führt zum einen zu einer erheblichen Erhöhung der erforderlichen Bauteile, zu einem erheblichen Arbeitsaufwand bei der Herstellung und letztlich auch zu einer Erhöhung des Gewichts der Konstruktion, die mit dieser Konstruktion eigentlich vermieden werden sollte.

Der vorliegenden Erfindung liegt daher die Aufgabe zugrunde, eine neue Konstruktion für eine Verbundplatte anzugeben, die hinsichtlich ihrer Bruchfestigkeit verbesserte Eigenschaften aufweist und insbesondere die genannten Nachteile nicht aufweist.

Gelöst wird diese Aufgabe mit den Merkmalen des Anspruchs 1. Vorteilhafte Ausführungsformen finden sich in den Unteransprüchen.

Erfindungsgemäß weist die Verbundplatte im Bereich der Ränder von in der oberen Schicht vorgesehenen Ausnehmungen, die zur Aufnahme von Spülbecken, Kochfeldern oder ähnlichem dienen, Trägerelemente auf. Die Trägerelemente bilden dabei bevorzugt einen Teil der Zwischenschicht, wobei wenigstens eines der Trägerelemente zusätzlich mit einem bevorzugt U-förmigen Stützelement versehen ist.

Bei der erfindungsgemäßen Verbundplatte weist die Zwischenschicht unterschiedliche Zonen auf: in einer ersten Zone, in der sich keine Ausnehmungen befinden, wird die Zwischenschicht im wesentlichen aus einem möglichst leichten Füllkörper gebildet. In einer weiteren Zone, die sich im Bereich der Ausnehmung in der oberen Schicht befindet, sind die an die erste Zone angrenzenden Bereiche der Zwischenschicht in Längs- und Querrichtung der Verbundplatte mit ersten bzw. zweiten Trägerelementen versehen. In einer dritten Zone, insbesondere dort, wo das Material der oberen Schicht sehr dünn oder schmal ist, ist das jeweilige Trägerelement zusätzlich mit dem Stützelement versehen.

Die Erfindung wird nachfolgend anhand der Zeichnungen in den Figuren 1 bis 3 schematisch näher erläutert:
- Figur 1: zeigt eine Explosionsdarstellung der erfindungsgemäßen Verbundplatte,
- Figur 2A: zeigt eine Draufsicht auf die Zwischenschicht der erfindungsgemäßen Verbundplatte,
- Figur 2B: zeigt eine Draufsicht auf die untere Schicht der erfindungsgemäßen Verbundplatte,
- Figur 3: zeigt eine Schnittdarstellung der verschiedenen Abschnitte der Verbundplatte.

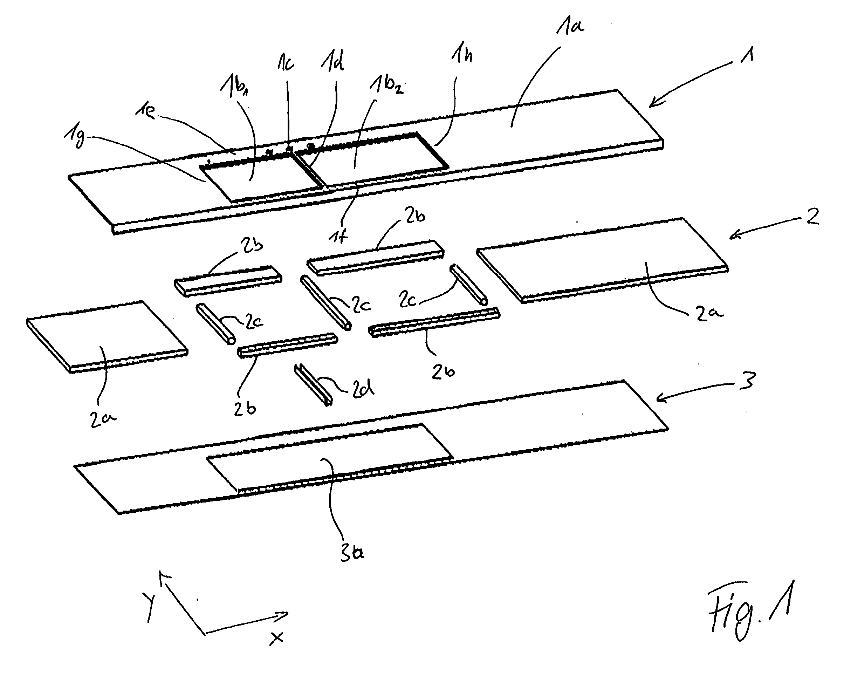

Die erfindungsgemäße Platte und ihre Komponenten sind in der Figur 1 dargestellt. Die Platte umfaßt eine obere Schicht 1 aus Naturstein oder einem anderen Material, welches insbesondere als Arbeitsfläche für Küchen geeignet ist. Die obere Schicht weist Ausnehmungen 1b₁, 1b₂ zur Aufnahme von Spülbecken sowie Ausnehmungen 1c zur Aufnahme von Armaturen oder dergleichen auf. Die Ausnehmungen 1b₁, 1b₂ sind im gezeigten Beispiel durch einen schmalen Steg 1d getrennt, der einstückig mit der oberen Schicht 1 ausgebildet ist. Die obere Schicht 1 ist dadurch im Bereich der in Längsrichtung x der Verbundplatte verlaufenden Ränder 1e, 1f sowie im Bereich der in Querrichtung y der Verbundplatte verlaufenden Ränder 1d, 1g, 1h gegenüber Belastungen aufgrund des spröden Materials bruchanfällig. Es sind daher weitere Schichten vorgesehen, nämlich eine (ggf. mehrlagige) Zwischenschicht 2, auf welche im folgenden genauer eingegangen wird, und eine darunter befindliche untere Schicht 3, welche bevorzugt aus Aluminium oder einem Aluminiumverbundmaterial besteht. Die untere Schicht 3 weist eine den Ausnehmungen 1b₁, 1b₂ entsprechende Ausnehmung 3a auf, durch welche etwa Spülbecken, Kochfelder oder dergleichen geführt werden können.

Die Zwischenschicht 2 umfaßt in Längsrichtung x der Platte mehrere Zonen. In den Bereichen, in welchen die obere Schicht keine Ausnehmungen aufweist, ist die Zwischenschicht 2 im wesentlichen durch Füllkörper 2a gebildet, die bevorzugt aus einem gegenüber dem Material der oberen Schicht 1 möglichst leichten Material, z.B. Polyurethan (PU), bestehen, um das Gewicht der Verbundplatte weitestgehend zu reduzieren. Im Bereich der Ausnehmungen 1b₁, 1b₂ sind in der Zwischenschicht Trägerelemente 2b, 2c in Längs- bzw. Querrichtung angeordnet, welche unterhalb der Ränder 1d, 1g, 1h bzw. 1g, 1f vorgesehen sind. Die Trägerelemente 2b, 2c dienen u. a. als Schraubfesten zur Verankerung der Verbundplatte an einem Unterbau (Unterschrank). Bevorzugt sind die quer (y-Richtung) zur Längsrichtung x verlaufenden ersten Trägerelemente 2c aus Holz (insbesondere Schichtholz), Kunststoff oder einem Material mit einem E-Modul von ca. 10.000 oder mehr ausgebildet und sind unterhalb der Ränder 1g, 1h sowie unterhalb des als Steg 1d ausgebildeten Randes der Ausnehmungen 1b₁, 1b₂ angeordnet. Die in Längsrichtung x der Platte verlaufenden zweiten Trägerelemente 2b sind unterhalb der Ränder 1e, 1f der Ausnehmungen angeordnet und vorzugsweise aus einem Polyurethan-Recyclat (PU-Recyclat) ausgebildet. Für das mittlere erste Trägerelement 2c, welches zur Anordnung unterhalb des Steges 1d vorgesehen ist, ist zusätzlich Stützelement 2d vorgesehen. Dieses ist bevorzugt U-förmig und aus Metall ausgebildet.

Das Stützelement 2d kann dabei auch mit der unteren Schicht 3 einstückig ausgebildet sein, welche hierzu im Bereich des Steges 2d Abkantungen aufweisen kann (nicht gezeigt).

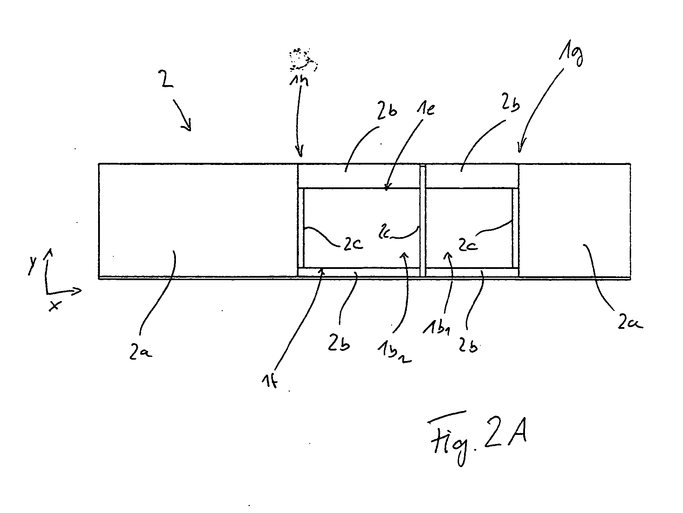

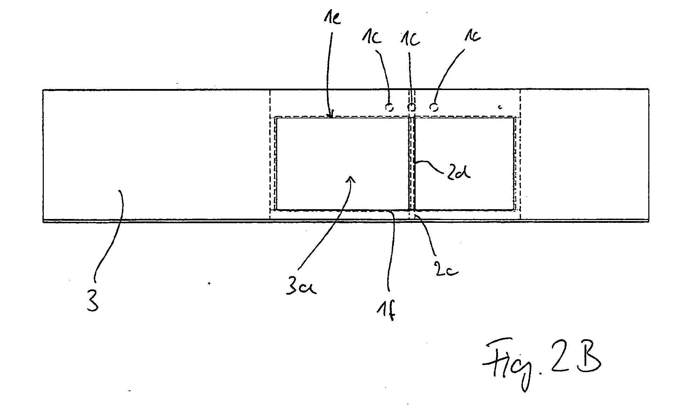

In den Figuren 2A und 2B sind Draufsichten auf die zusammengesetzte Verbundplatte gezeigt: Figur 2A zeigt die Verbundplatte von unten ohne die untere Schicht 3. Figur 2B zeigt dieselbe Ansicht mit unterer Schicht 3.

In Figur 2A ist der Aufbau der Zwischenschicht 2 im Bereich der Ausnehmungen 1b₁, 1b₂ zu erkennen. Seitlich der Ausnehmungen 1b₁, 1b₂ sind die Füllkörper 2a angeordnet. An diese grenzen im Bereich der Ränder 1g, 1h seitlich die quer zur Längsrichtung x verlaufenden Trägerelemente 2c, sowie die an den Seiten der Platte in Längsrichtung y verlaufenden Trägerele-mente 2b an. Unterhalb des Steges (vgl. Fig. 2B, Pos. 2d) ist ebenfalls ein quer zur Längsrichtung x angeordnetes Trägerelement 2c vorgesehen, welches sich im Gegensatz zu den übrigen Trägerelementen im wesentlichen über die gesamte Breite der Platte bzw. der Zwischenschicht (in y-Richtung) erstreckt, so daß die Endabschnitte dieses mittleren Trägerelements 2c auf beiden Längsseiten der Verbundplatte zwischen zwei in Längsrichtung x verlaufenden Trägerelementen 2b angeordnet sind. Das genannte mittlere Trägerelement ist erfindungsgemäß von einem Stützelement 2d umgeben.

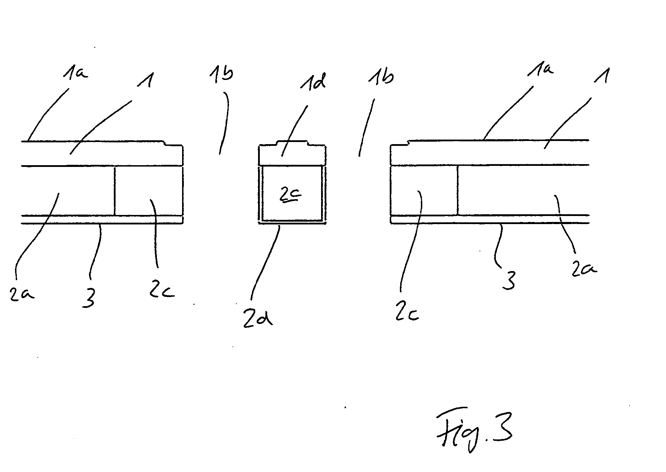

Dies ist in den Figuren 2B und 3 dargestellt. Das mittlere Trägerelement 2c ist in Figur 2B durch gestrichelte Linien angedeutet. Im Gegensatz zu diesem Trägerelement erstreckt sich das im Querschnitt U-förmige, um das Trägerelement herum angeordnete Stützelement 2d nicht über die gesamte Breite, sondern überbrückt lediglich die Breite der Ausnehmung 1b₁, 1b₂ zwischen den Innenseiten der Ränder 1e und 1f. Der übrige Bereich der Zwischenschicht wird durch die untere Schicht 3 abgedeckt. Dabei ist das mittlere Trägerelement 2c bevorzugt geringfügig schmaler als der Steg 1d in der oberen Schicht 1 ausgebildet. Das Stützelement 2d umschließt, wie in Figur 3 gezeigt, das mittlere Trägerelement 2c nach drei Seiten, wobei die Schenkel des Stützelements 2d bevorzugt so ausgebildet sind, daß sie mit den Seitenflächen des Steges 1d bündig abschließen. Genauso ist die Basis des Stützelements 2d bevorzugt so ausgebildet, daß diese mit der unteren Schicht 3 bündig verläuft.

Durch die gewählte Konstruktion läßt sich im Bereich der Schwachstellen (Ausnehmungen und Stege) von Verbundplatten durch den Einsatz von wenigen Trägerelementen im Randbereich sowie eines an einem Trägerelement angelegten Stützelements die Bruchfestigkeit deutlich steigern, ohne daß vorhandene vorteilhafte Eigenschaften bekannter Konstruktionen wie Gewicht oder Verarbeitbarkeit dafür aufgegeben werden müssen.

## Patentansprüche

1. Verbundplatte, insbesondere Arbeitsplatte für Küchen, mit einer oberen Schicht (1), insbesondere aus Naturstein, welche eine Arbeitsfläche (1a) bildet, einer auf der der Arbeitsfläche (1a) abgewandten Seite der oberen Schicht angeordneten Zwischenschicht (2) sowie einer unteren Schicht (3), welche auf der von der oberen Schicht (1) abgewandten Seite der Zwischenschicht (2) angeordnet ist, wobei die obere Schicht (1) Ausnehmungen (1b₁, 1b₂), insbesondere zum Einsatz von Spülbecken, Kochfeldern oder dergleichen, aufweist, wobei die Zwischenschicht (2) im Bereich der Ränder der Ausnehmungen (1b₁, 1b₂) Trägerelemente (2b, 2c) und im übrigen Bereich wenigstens einen Füllkörper (2a) aufweist
**dadurch gekennzeichnet,**
**daß** wenigstens eines der Trägerelemente (2c) wenigstens abschnittweise mit einem Stützelement (2d) versehen ist.

2. Verbundplatte nach Anspruch 1,
bei welcher wenigstens zwei Ausnehmungen (1b₁, 1b₂) durch einen stegförmigen Abschnitt (1d) voneinander getrennt sind, unter welchem in der Zwischenschicht (2) ein sich über wenigstens einen wesentlichen Teil der Breite des Abschnitts (1d) erstreckendes Trägerelement (2c) erstreckt.

3. Verbundplatte nach Anspruch 2,
**dadurch gekennzeichnet,**
**daß** das sich unter dem stegförmigen Abschnitt (1d) erstreckende Trägerelement (2c) von einem im Querschnitt etwa U-förmigen Stützelement (2d) umgeben ist.

4. Verbundplatte nach einem der vorherigen Ansprüche,
**dadurch gekennzeichnet,**
**daß** wenigstens eines der Trägerelemente (2c) aus Holz, insb. Schichtholz, Kunststoff oder einem Material mit einem E-Modul von ca. 10.000 oder mehr besteht.

5. Verbundplatte nach einem der vorherigen Ansprüche,
**dadurch gekennzeichnet,**
**daß** wenigstens eines der Trägerelemente (2b) aus einem Recyclat, vorzugsweise einem PU-Recyclat, besteht.

6. Verbundplatte nach einem der vorherigen Ansprüche,
**dadurch gekennzeichnet,**
**daß** der Füllkörper (2a) der Zwischenschicht (2) Polyurethan aufweist.

7. Verbundplatte nach einem der vorherigen Ansprüche,
**dadurch gekennzeichnet,**
**daß** die untere Schicht (3) Aluminium oder ein Aluminiumverbundmaterial umfaßt.

8. Verbundplatte nach einem der vorherigen Ansprüche,
**dadurch gekennzeichnet,**
**daß** die in Längsrichtung (x) der Verbundplatte verlaufenden Ränder (le, 1f) der Ausnehmungen (1b₁, 1b₂) in der Zwischenschicht (2) mit ersten Trägerelementen (2b) und die quer zur Längsrichtung (x) verlaufenden Ränder (1d, 1g, 1h) der Ausnehmungen (1b₁, 1b₂) mit zweiten Trägerelementen (2c) verstärkt sind, wobei eines der zweiten Trägerelemente (2c) mit dem Stützelement (2d) versehen ist.

9. Verbundplatte nach einem der vorherigen Ansprüche,
**dadurch gekennzeichnet,**
**daß** die untere Schicht (3) im Bereich der Ausnehmungen (1b₁, 1b₂) Aufkantungen aufweist.

10. Verbundplatten nach Anspruch 9,
**dadurch gekennzeichnet,**
**daß** das Stützelement (2d) durch die Aufkantungen und einen daran angrenzenden Teil der unteren Schicht (3) gebildet wird.

11. Verbundplatte nach einem der vorherigen Ansprüche,
**dadurch gekennzeichnet,**
**daß** sich das Stützelement (2d) quer zur Längsrichtung (x) der Verbundplatte im Bereich zwischen zwei gegenüber liegenden Rändern (le, 1f) der Ausnehmungen (1b₁, 1b₂) erstreckt.

12. Verbundplatte nach einem der vorherigen Ansprüche,
**dadurch gekennzeichnet,**
**daß** die Zwischenschicht (2) mehrlagig ausgebildet ist.

## Claims

1. Composite plate, more particularly a worktop for kitchens, with an upper layer (1), more particularly of natural stone, which forms a work surface (1a), an intermediate layer (2) mounted on the side of the upper layer remote from the work surface (1a), as well as a lower layer (3) which is mounted on the side of the intermediate layer remote from the upper layer (1), wherein the upper layer (1) has recesses (1b₁, 1b₂), more particularly for inserting sinks, cooker zones or the like, wherein the intermediate layer (2) has in the area of the edges of the recesses (1b₁, 1b₂) support elements (2b, 2c) and in the remaining area at least one filler member (2a), **characterised in that** at least one of the support elements (2c) is provided in sections with a supporting element (2d).

2. Composite plate according to claim 1
in which at least two recesses (1b₁, 1b₂) are separated from one another by a web-shaped section (1d) underneath which in the intermediate layer (2) a support element (2c) extends which stretches over at least a significant part of the width of the section (1d).

3. Composite plate according to claim 2
**characterised in that**
the support element (2c) stretching underneath the web-shaped section (1d) is enclosed by a supporting element (2d) of substantially U-shaped cross-section.

4. Composite plate according to one of the preceding claims
**characterised in that**
at least one of the support elements (2c) is made of wood, more particularly laminated wood, plastics or a material having an E-modulus of about 10.000 or more.

5. Composite plate according to one of the preceding claims
**characterised in that**
at least one of the support elements (2b) is made from a recyclate, preferably a PU recyclate.

6. Composite plate according to one of the preceding claims
**characterised in that**
the filler member (2a) of the intermediate layer (2) comprises polyurethane.

7. Composite plate according to one of the preceding claims
**characterised in that**
the lower layer (3) comprises aluminium or an aluminium composite material.

8. Composite plate according to one of the preceding claims
**characterised in that**
the edges (1e, 1f) of the recesses (1b₁, 1b₂) running in the longitudinal direction (x) of the composite plate are reinforced in the intermediate layer (2) with first support elements (2b) and the edges (1d, 1g, 1h) of the recesses (1b₁, 1b₂) running across the longitudinal direction (x) are reinforced with second support elements (2c), wherein one of the second support elements (2c) is provided with the supporting element (2d).

9. Composite plate according to one of the preceding claims
**characterised in that**
the lower layer (3) has upturned edges in the area of the recesses (1b₁, 1b2).

10. Composite plate according to claim 9
**characterised in that**
the supporting element (2d) is formed by upturned edges and a part of the lower layer (3) adjoining same.

11. Composite plate according to one of the preceding claims
**characterised in that**
the supporting element (2d) extends transversely to the longitudinal direction (x) of the composite plate in the area between two opposing edges (le, 1f) of the recesses (1b₁, 1b₂).

12. Composite plate according to one of the preceding claims
**characterised in that**
the intermediate layer (2) is formed multi-layered.

## Revendications

1. Plaque composite, particulièrement plan de travail domestique pour cuisines, qui est composée d'une couche supérieure (1), en particulier en pierre naturelle, qui forme un plan de travail (1a), d'une couche intermédiaire (2), qui est disposée sur la face de la couche supérieure orientée à l'opposé du plan de travail (1a), ainsi que d'une couche inférieure (3), qui est disposée sur la face de la couche intermédiaire (2) orientée à l'opposé de la couche supérieure, sachant que la couche supérieure (1) présente des évidements (1b₁, 1b₂), en particulier pour l'incorporation d'éviers, de plaques de cuisson ou analogues, la couche intermédiaire (2) présentant, dans la zone des bords des évidements (1b₁, 1b₂), des éléments de support (2b, 2c) et, dans le reste de ladite zone, au moins un corps de remplissage (2a),
**caractérisée en ce que**
l'un des éléments de support (2c) au moins est pourvu d'un élément de support (2d), au moins par sections.

2. Plaque composite selon la revendication 1,
dans laquelle au moins deux évidements (1b₁, 1b₂) sont séparés l'un de l'autre par une section en forme de patte (1d), sous laquelle un élément de support (2c) s'étend, dans la couche intermédiaire (2), sur au moins une partie essentielle de la largeur de ladite section (1d).

3. Plaque composite selon la revendication 2, **caractérisée en ce**
**que** des éléments de support (2c), qui s'étendent sous la section en forme de patte (1d), sont entourés par un élément de support (2d) présentant une section transversale approximativement en U.

4. Plaque composite selon l'une des revendications précédentes,
**caractérisée en ce**
**que** l'un des éléments de support (2c) au moins consiste en bois, en particulier en bois stratifié, en matière synthétique ou en un matériau ayant un module d'élasticité d'environ 10.000 ou plus.

5. Plaque composite selon l'une des revendications précédentes,
**caractérisée en ce**
**que** l'un des éléments de support (2b) au moins consiste en PU recyclé.

6. Plaque composite selon l'une des revendications précédentes,
**caractérisée en ce**
**que** le corps de remplissage (2a) de la couche intermédiaire (2) présente du polyuréthane.

7. Plaque composite selon l'une des revendications précédentes,
**caractérisée en ce**
**que** la couche inférieure (3) comprend de l'aluminium ou un matériau composite d'aluminium.

8. Plaque composite selon l'une des revendications précédentes,
**caractérisée en ce**
**que** les bords (1e, 1f) des évidements (1b₁, 1b₂), qui s'étendent dans la direction longitudinale (x) de la plaque composite, dans la couche intermédiaire (2), sont renforcés par des premiers éléments de support (2b) et les bords (1d, 1g, 1h) des évidements (1b₁, 1b₂), qui s'étendent perpendiculairement à la direction longitudinale (x), sont renforcés par des deuxièmes éléments de support (2c), sachant que l'un des deuxièmes éléments de support (2c) est pourvu de l'élément de support (2d).

9. Plaque composite selon l'une des revendications précédentes,
**caractérisée en ce**
**que** la couche inférieure (3) présente, dans la région des évidements (1b₁, 1b₂), des bords pliés vers le haut.

10. Plaque composite selon la revendication 9,
**caractérisée en ce**
**que** l'élément de support (2d) est formé par les bords pliés vers le haut et une partie de la couche inférieure (3) y adjacente.

11. Plaque composite selon l'une des revendications précédentes,
**caractérisée en ce**
**que** l'élément de support (2d) s'étend transversalement par rapport à la direction longitudinale (x) de la plaque composite, dans la région située entre deux bords opposés (le, 1f) des évidements (1b₁, 1b₂).

12. Plaque composite selon l'une des revendications précédentes,
**caractérisée en ce**
**que** la couche intermédiaire (2) est formée en plusieurs épaisseurs.
